# EUROPEAN PATENT SPECIFICATION

(11) **EP 0 956 947 B1**
(45) Date of publication and mention of the grant of the patent: **09.03.2005**
(21) Application number: 99109168.7
(22) Date of filing: 10.05.1999
(51) Int. Cl.: B32B 27/32, C08L 23/16

(54) **Multilayer polyolefinic film with improved heat sealing**
Mehrschichtfolie aus Polyolefinen mit verbesserter Heisssiegelfähigkeit
Film polyoléfinique multicouche à thermosoudage amélioré

(30) Priority: 13.05.1998 IT MI981030
(43) Date of publication of application: 17.11.1999
(73) Proprietor: Polimeri Europa S.r.l., 72100 Brindisi (IT)
(72) Inventor: Lanzani, Primo Carlo, Soresina (IT); Malisia, Luciano, Bologna (IT); Milanesi, Luigi, Castelleone (IT)
(74) Representative: Bordonaro, Salvatore

(56) References cited:
- EP-A- 0 803 352
- DE-A- 19 749 765
- US-A- 5 482 780
- US-A- 5 489 454

## Description

The present invention relates to a multilayer polyolefinic film having excellent mechanical properties, good processability and improved tear resistance after self heat sealing.

More specifically, the present invention relates to a multilayer film comprising a main layer based on a polymer or copolymer of propylene, on at least one surface of which, (preferably on both), at least a second layer essentially consisting of a mixture of a polymer or copolymer of propylene with a particular copolymer of ethylene, is laid, normally by means of co-extrusion.

Films based on polyolefins are widely used in packaging operations of a great variety of products. The properties normally requested for these films are transparency, mechanical and environmental resistance, gloss, heat shrinking and good self-seal. In particular, a good self-seal means that the film must be sealable on itself by means of high rate linear sealing devices, so as not to slow down the productive chain from which the product, already packaged, leaves, ready for shipment.

Prevalently isotactic polypropylene, or copolymers of propylene containing up to 10% by weight of a second olefinic monomer, preferably ethylene, have satisfactory mechanical and optical properties for the above purposes and can be processed to give films appropriate for many uses. Films made of polypropylene or its copolymers, however, are not sufficiently self-sealing, and the packaging obtained therewith tends to tear easily along the welding lines.

It has been found that polyethylene and, particularly, copolymers of ethylene with 1-butene normally known as LLDPE, on the contrary, have a satisfactory self-seal but they do not give films with satisfactory mechanical and optical properties for certain uses. Films consisting of two or more different polymeric layers are also described in literature, in which, for example, a polypropylene film is co-extruded with a polyethylene film to obtain a bi-layered film easily sealable onto the surface of polyethylene and having the typical mechanical characteristics of polypropylene. For example, U.S. patent 4,565,738 describes a film comprising an internal layer of polypropylene on whose surfaces two finer layers of a composition comprising a propylene/ethylene block copolymer and a copolymer of ethylene with an alpha-olefin, are co-extruded. These films, however, still have unsatisfactory optical properties and tend to have detachment areas between the two polymeric layers, owing to the poor adherence between polyethylene and polypropylene, especially in those applications in which the stretching conditions to which the film is subjected before use, are particularly severe.

Another particularly critical problem relates to the minimum temperature at which the self-sealing operation can be effected. In fact, it is preferable for the sealing between two edges or surfaces of a film to be carried out at a relatively low temperature (possibly < 120°C) without there being any deterioration in the mechanical properties of the sealing itself, particulary the tensile strength and tear resistance. In fact, the lower the sealing temperature, with the same mechanical resistance, the greater is the rate at which it is possible to operate in industrial processes for the manufacturing of products for packaging.

It has generally been found that an improvement in the performance of films for the above uses can be obtained by arranging two or more layers co-extruded with each other to form a multilayer film in which at least one layer (usually high-melting) gives the desired mechanical properties, whereas a suitable surface layer allows the sealing to be effected at lower temperatures. There are numerous parameters however which must be taken into consideration in the production of these multilayer films to obtain a really satisfactory product which is suitable for the greatest number possible of industrial demands. It is necessary in fact for the layers in the film to have excellent adherence with each other without requiring the use of glues. In addition the film must have a sufficient transparency and a good surface appearance without defects or heterogeneous areas. It should also be possible to subject the film to mono or bidimensional stretching without part of the layers becoming detached, as well as, naturally, a good self-seal and mechanical resistance as specified above.

The Applicant has now found that by using a particular polymeric composition to produce a self-sealing layer of a multilayer film, it is possible to obtain an excellent combination of the various properties described above, to produce a film with a good transparency and surface gloss, excellent adhesion between the layers, reduced self-sealing temperature and excellent mechanical properties.

The present invention therefore relates to a multilayer film comprising:
(A) at least one polymeric layer essentially consisting of a crystalline polymer of propylene or a composition of said crystalline polymer with up to 10% by weight of a polymer of ethylene;
(B) at least one polymeric layer co-extruded with the previous one, essentially consisting of a composition of:
   (a) from 65 to 99% by weight of a statistical copolymer of propylene containing from 0.5 to 20%, preferably from 1 to 10%, in moles of monomeric units deriving from ethylene;
   (b) from 1 to 35% by weight of a copolymer of ethylene containing from 1 to 10% in moles of monomeric units deriving from an alpha-olefin having at least 5, preferably from 6 to 12, carbon atoms.

The term "essentially consisting of", as used in the present description and claims with reference to the composition of polymeric layers or film, means that a certain layer or film may also comprise, in addition to the polymer or specific composition, optional additives normally used in the art, such as antioxidants, slip agents, anti-flame plasticizers, etc., which are not present in a quantity exceeding 5% by weight.

The term "polymer of", when referring to a certain monomer, also comprises in its definition, unless otherwise specified, the meaning of "copolymer" of that monomer which forms the most abundant monomeric unit thereof.

In its more general aspect, the present invention relates to a multilayer film consisting of at least two layers (A) and (B) as defined above. Films consisting of three or more layers, in which at least two layers can be identified of the type (A) and (B) respectively, adjacent and co-extruded, of which layer (B) forms at least an external surface, are therefore included in the scope of the present invention.

In a particularly preferred embodiment of the present invention, a layer (A) as defined above is placed between two layers (B), preferably having the same composition, each co-extruded on a surface of layer (A), so as to form a three-layered film in which the thickness of the central layer (A) measures from 50 to 90% of the total thickness of the film.

According to the present invention, the crystalline polymer of propylene suitable as main constituent of layer (A) is selected from homo-polymers and copolymers of propylene, or their mixtures, obtained by the known stereospecific polymerization processes also called "Ziegler-Natta". More recently these polymers have also been obtained by means of processes which use catalysts based on metallocenes of titanium or zirconium, and also other complexes of transition metals. The main characteristic of these polymers is the presence in the polymeric chain of more or less long sequences of chiral monomeric units deriving from propylene, all having the same configuration or an alternating configuration according to a non-random rule. Typical polymers of this type are isotactic polypropylene, commercially available in numerous grades and types, in addition to syndiotactic polypropylene and copolymers of propylene with other alpha-olefins, particularly copolymers of propylene with ethylene 1-butene, 1-hexene, 1-pentene, 1-octene, containing 10% of alpha-olefin at the most. In order to obtain a satisfactory mechanical performance for a high number of uses, the above polymers of propylene preferably have a Melt Flow Index, abbr. MFI, measured according to the ISO 1133 method) ranging from 0.2 to 5.0 g/10 min.

Particularly preferred for layer (A) are prevalently isotactic homopolymers of propylene with an MFI ranging from 1.5 to 2.5 g/10min and a tacticity degree (iso dyads/syndio dyads) of more than 90%.

According to a particular embodiment of the present invention, layer (A) essentially consists of a composition of a polymer of propylene as defined above, preferably polypropylene homopolymer, with from 1 to 5% by weight (with respect to the total weight of the composition) of a copolymer of ethylene, preferably a copolymer of ethylene containing from 1 to 10% in moles of monomeric units deriving from an alpha-olefin having from 3 to 12 carbon atoms, more preferably of the same copolymer selected as component (b) of layer (B).

As far as layer (B) is concerned, this preferably consists of a composition of (a) and (b), as previously defined, in weight ratios ranging from 90/10 to 70/30. In fact in this composition range, an excellent equilibrium between transparency, sealing and adherence to layer (A) is obtained, even though ratios not included therein can conveniently be used when the expert in the field wishes to give privilege to particular characteristics with respect to others.

The copolymer of propylene which forms component (a) of the present invention is a statistic copolymer ("random" according to the English term commonly used in the art) of propylene with from 0.5 to 20% in moles of monomeric units deriving from ethylene, or a mixture of these copolymers. It has been found however that the best results with respect to the adhesion properties to layer A and sealing properties, are obtained with these copolymers of propylene containing from 1 to 10%, more preferably from 1 to 5% in moles of ethylene units. These copolymers can also be obtained with the known polymerization processes in the presence of Ziegler-Natta type catalysts, including catalysts based on a complex of a transition metal, particularly a metallocene of titanium or zirconium. In these processes, a gaseous or liquid (under pressure) mixture of propylene and ethylene in the appropriate proportions is fed to a reactor in which it comes into contact with the catalyst and produces the desired copolymer. As can be observed from infra-red spectroscopic and NMR analyses, the monomeric units deriving from ethylene are distributed at random along the whole polymeric chain.

The polymer which forms component (b) of layer (B) of the present invention is selected from linear copolymers of ethylene with at least one alpha-olefin having at least 5 carbon atoms, or their mixtures. Preferred alpha-olefins are those non-branched having from 6 to 10 carbon atoms, such as, for example, 1-hexene, 1-octene, 1-decene, all commercially available in industrial quantities. These copolymers of ethylene belong to the known group of linear low density polyethylene (LLDPE or VLDPE) and contain from 1 to 10% in moles, in total, of monomeric units deriving from one or more of said alpha-olefins. Monomeric units deriving from lower alpha-olefins, such as propylene or 1-butene, may also be present in the copolymer forming component (b), provided they are in a quantity not exceeding 5% in moles, without jeopardizing the advantageous properties thereof for the purposes of the present invention. Typically, the polymer forming component (b) has an MFI ranging from 3.1 to 5.5 g/10 min. and a density, measured according to the ISO 1183 method, ranging from 0.89 to 0.93. Also these copolymers, like the previous ones, can be obtained with the known polymerization techniques in the presence of Ziegler-Natta catalysts or catalysts based on complexes of transition metals. In general, any expert in the field is capable of determining, in the project phase, the optimum polymerization conditions and type of catalyst for obtaining the desired polyethylene, which may vary from those preselected for obtaining, for example, the polymer of propylene suitable as constituent of component (a) described above. Polymers of ethylene suitable as component (b) of the present invention are commercially available at various suppliers, for example, Polimeri Europa S.r.l. under the trade-name of CLEARFLEX® .

The composition forming layer (B) (and, if the case, forming layer (A)) can be prepared prior to the preparation process of the multilayer film, by mixing, in the molten state, the established quantities of the two components (a) and (b), until a homogeneous mixture is formed. This can be easily effected in particular equipment suitable for the purpose and known to experts in the field. Particularly, the two components can be dry premixed and subsequently melted and homogeneously mixed with each other in extruders operating according to the known techniques and conditions, under the force of one or more appropriately shaped screw shafts. Alternatively the two components, normally in granule form, can be fed separately in different points of the extruder by means of hoppers. At the end, the composition thus obtained is expelled in the form of a thread having a diameter of about 5 mm, cooled and solidified and finally cut into granule form. The polymeric composition of layer (B) thus obtained can be conserved for an indefinite period before being melted again in equipment for the preparation of the co-extruded film. This equipment usually comprises two or more extrusion systems (slotted sleeve extruder and gear pump), depending on the desired number of layers with a different composition, connected to a particular ring nozzle from whose end, subdivided into separate channels, the layers of polymer in the molten state emerge and immediately converge with each other, in continuous. The multilayer thus formed, still semi-molten, is then expanded and cooled under the pressure of an airjet, according to the known "blow-extrusion" technique. Alternatively, the components for the composition of layer (B) can be directly fed to the extruder connected with the above nozzle. In this way, the multilayer film of the present invention is obtained, in continuous, starting from the single polymeric components. Equipment suitable for the purpose is easily available on the market.

The multilayer film thus obtained normally has a thickness, depending on the specific requirements, ranging from 10 to 500 µm, although films with a thickness outside this range are also included in the present invention, the thickness of the film not being a critical element thereof. The film is subsequently mono- or bi-dimensionally stretched, finally obtaining the desired thickness (usually 5-100 µm) and mechanical properties, before its commercial use. As already mentioned, the thickness of the layer (or layers) of type (A) form, in all, from 50 to 90%, preferably from 60 to 80% of the total thickness of the film, whereas the layer (or layers) of type (B) form, in all, at least 5%, preferably at least 15% and more preferably from 15 to 30% of the total thickness of the film in question.

The multilayer film of the present invention is characterized by a low minimum heat sealing temperature, measured according to the method described hereunder, ranging, according to the composition of layer (B), from 105 to 115°C, for a stress resistance of at least 1000 cN/cm. This desirable property is surprisingly obtained without any damage at all to the other properties such as transparency, gloss and adherence between the layers of film (especially during the stretching). The film thus conserves excellent optical properties, comparable to those of polypropylene film alone, in addition to an excellent self-consistency and a high tear and delamination resistance.

The multilayer films of the present invention can be used for a wide variety of industrial applications, mainly in the field of flexible packaging and adhesive tapes such as, for example, no-collant thermoshrinkable and biorientated.

Some illustrative examples are provided hereunder for a more detailed description of the present invention and for its embodiment, which however do not form any limitation whatsoever to the scope of the present application and relative patent.

The following polymeric materials were used in the examples for the preparation of the multilayer film:
P1) random propylene-ethylene copolymer produced by MONTELL S.p.A. under the trade-name of "Adsyl 5 C 37 F"®;
P2) polypropylene homopolymer produced by AMOCO under the trade-name of "BOPP 157 GD02"®;
E1) linear ethylene-1-hexene copolymer (LLDPE-C6) produced by POLIMERI EUROPA S.r.l. under the trade-name of "Clearflex CL 106"®;
E2) linear ethylene-1-octene copolymer (LLDPE-C8) produced by POLIMERI EUROPA S.r.l. under the trade-name of (Clearflex CL 508)® .

The main characteristics of the above polymeric materials are indicated in table 1 below.

**Table 1:**

| characteristics of polymeric materials | | | |
|---|---|---|---|
| Polimer | MFI(g/10') (2.16 kg/230°C) | Density (g/cm³) | Comonomer (weight %) |
| (P1) | 5.5 | 0.890 | <4 |
| (P2) | 2.0 | 0.900 | -- |
| (E1) | 3.2 | 0.917 | 8 |
| (E2) | 2.7 | 0.935 | <5 |

The films obtained were subjected to characterization according to the methods listed hereunder.
- Optical properties:
   - HAZE, according to the method ASTM D1003-92;
   - gloss AT 45°, according to the method ASTM D 2457-90
- Tensile properties, (according to the method ASTM D 882-91)
   - Ultimate tensile stress
   - Yield point
   - Ultimate elongation
- Heat shrinking properties, according to norm UNI 8515-83
- Sealing with HEAT SEAL, according to the internal method M001-2.73, set up by the Applicant and described hereunder.
   HEAT SEAL.Rectangular test-samples of 300 x 15 mm are prepared of the film on which the measurement is to be made. Adhesive tape is placed on one side of the film. The sample thus prepared is first U-folded with the adhesive tape on the outside, and then inserted between two plates of a sealing apparatus "PACK FORSK HOT TACK TESTER Mod. 52-B", whose sealing temperature has been preset at the selected value, 110°C in this case. After effecting the sealing at a pressure of 0.15 MPa for 0.5 seconds, the test-sample is extracted and left to rest for 24 hours in an environment conditioned at 23°C and 50% of relative humidity. The ends of the test-sample are then inserted, under the same conditions, between the clips of an INSTRON dynamometre and subjected to tensile stress until breakage of the seal. The F break force is recorded and the "Heat Seal Strength" (HSS) result is expressed as a ratio F/L wherein L is the width of the test-sample in cm (3 cm).

### EXAMPLES 1-5

5 samples of three-ply film were prepared by combining the polymers specified above. In example 1, which should be considered as a comparative reference sample, both the internal layer and the two external layers essentially consist of polymers of propylene; in the other examples 2 to 5, the internal layer is of type (A) and the external layers are the same and consist of a composition of type (B) of the present invention. The relative compositions of each layer are indicated in table 2 below. These compositions were obtained by mixing the components, in the suitable proportions, in an extruder, followed by the blow-extrusion of the multilayer film by means of an appropriate ring nozzle at the head of the equipment.

**Table 2:**

| composition of the multilayer film | | | |
|---|---|---|---|
| Example | External layer | Central layer | External layer |
| 1 (comp) | P1 | P2 | P1 |
| 2 | P1+20%E1 | P2+3%E1 | P1+20%E1 |
| 3 | P1+30%E1 | P2+3%E2 | P1+30%E1 |
| 4 | P1+20%E2 | P2+3%E2 | P1+20%E2 |
| 5 | P1+30%E2 | P2+3%E2 | P1+30%E2 |

The films were prepared by means of a multilayer minicast plant comprising a "SIMPLAS" "coathanger" head with an opening of 0.6 mm, a total width of 350 mm and a useful film width of 220 mm. Three extruders were connected at the head, one for each polymeric layer, having the following characteristics:
Extruder for: Trade-mark Screw diam. (mm) length/diam.

| | | | |
|---|---|---|---|
| extern.layer | GHIOLDI | 30 | 27 |
| central layer | GHIOLDI | 30 | 27 |
| extern. layer | GOETTFERT | 35 | 27 |

The operating conditions are indicated in table 3:

**Table 3:**

| operating conditions for film preparation | | | |
|---|---|---|---|
| Parameters | Ext.layer | Cent.layer | Ext.layer |
| Barrel temp.(°C) | 225-250 | 225-250 | 225-250 |
| Filter/neck temp.(°C) | 260-270 | 260-270 | 260-270 |
| Head temp. (°C) | 270 | 270 | 270 |
| Screw revs/min | 20 | 55 | 16 |
| Absorption at | 10 | 13.8 | 9 |
| Flow-rate Kg/h | 2.2 | 6.4 | 2.2 |
| Thickness (µm) | 6 | 18 | 6 |
| Total film thick. (µm) | | 30 | |
| "Chill Roll" rate (m/min) | | 19 | |

At the end of each preparation, the non-stretched film was characterized by measuring its properties according to what is listed above. The results of the characterization tests are indicated in table 4 below.

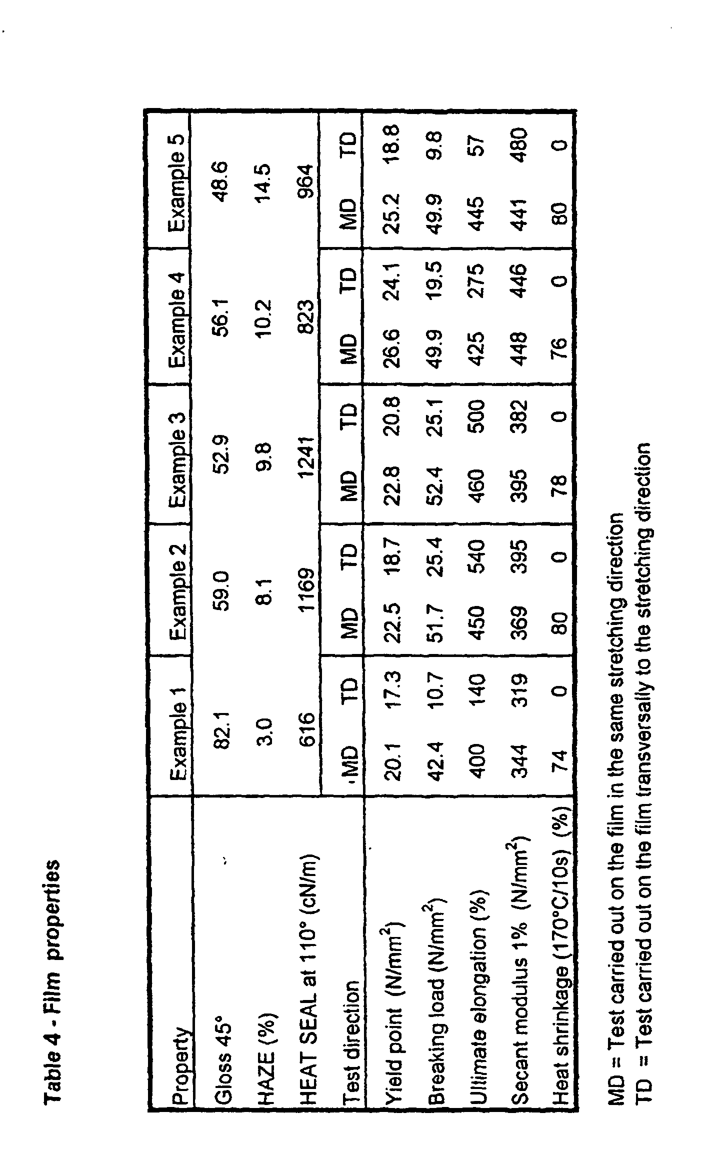

## Claims

1. A multilayer film comprising:
(A) at least one polymeric layer essentially consisting of a crystalline polymer of propylene or a composition of said crystalline polymer with up to 10% by weight of a polymer of ethylene;
(B) at least one polymeric layer co-extruded with the previous one, essentially consisting of a composition of:
(a) from 65 to 99% by weight of a statistical co-polymer of propylene containing from 0.5 to 20% in moles of monomeric units deriving from ethylene;
(b) from 1 to 35% by weight of a copolymer of ethylene containing from 1 to 10% in moles of monomeric units deriving from an alpha-olefin having at least 5 carbon atoms.

2. The multilayer film according to claim 1, consisting of three co-extruded layers in which a central layer (A) is placed between two external layers (B), so that the thickness of the central layer (A) measures from 50 to 90% of the total thickness of the film.

3. The multilayer film according to claim 2, wherein the two external layers (B) have the same thickness and composition.

4. The multilayer film according to any of the previous claims, wherein said alpha-olefin in the copolymer of ethylene which forms component (b) is selected from linear alpha olefins having from 6 to 10 carbon atoms.

5. The multilayer film according to any of the previous claims, wherein said statistic copolymer of propylene which forms component (a) comprises from 1 to 10% preferably from 1 to 5%, in moles of monomeric units deriving from ethylene.

6. The multilayer film according to any of the previous claims, wherein said layer (A) essentially consists of prevalently isotactic polypropylene.

7. The multilayer film according to any of the previous claims from 1 to 5, wherein said layer (A) essentially consists of a composition containing prevalently isotactic polypropylene and from 1 to 5% by weight of the same copolymer of ethylene which forms component (b) of said layer (B).

8. The multilayer film according to any of the previous claims, wherein, in said layer (B), components (a) and (b) are present in a weight ratio ranging from 90/10 to 70/30.

9. The multilayer film according to any of the previous claims, having a total thickness, when not stretched, ranging from 10 to 500 µm.

10. Mono- or bi-orientated film according to any of the previous claims from 1 to 9.

11. Use of the film according to any of the previous claims for the production of flexible packaging and adhesive tapes.

## Patentansprüche

1. Mehrschichtfolie, umfassend:
(A) zumindest eine polymere Schicht, die im wesentlichen aus einem kristallinen Polymer aus Propylen oder einer Zusammensetzung aus dem kristallinen Polymer mit bis zu 10 Gew.-% eines Polymers aus Ethylen besteht;
(B) zumindest eine polymere Schicht, die mit der zuvor genannten co-extrudiert ist, die im wesentlichen aus einer Zusammensetzung aus:
(a) 65 bis 99 Gew.-% eines statistischen Copolymers aus Propylen, das 0,5 bis 20 Mol-% an monomeren Einheiten enthält, die aus Ethylen stammen;
(b) 1 bis 35 Gew.-% eines Copolymers aus Ethylen, das 1 bis 10 Mol-% an monomeren Einheiten enthält, die aus einem alpha-Olefin mit zumindest 5 Kohlenstoffatomen stammen besteht.

2. Mehrschichtfolie nach Anspruch 1, bestehend aus drei co-extrudierten Schichten, worin eine Mittelschicht (A) zwischen zwei äußeren Schichten (B) plaziert wird, so daß die Dicke der Mittelschicht (A) 50 bis 90 % der Gesamtdicke der Folie ausmacht.

3. Mehrschichtfolie nach Anspruch 2, wobei die zwei äußeren Schichten (B) dieselbe Dicke und Zusammensetzung aufweisen.

4. Mehrschichtfolie nach einem der vorhergehenden Ansprüche, wobei das alpha-Olefin in dem Copolymer aus Ethylen, das Komponente (b) bildet, aus linearen alpha-Olefinen mit 6 bis 10 Kohlenstoffatomen ausgewählt wird.

5. Mehrschichtfolie nach einem der vorhergehenden Ansprüche, wobei das statistische Copolymer aus Propylen, das Komponente (a) bildet, 1 bis 10 Mol-%, bevorzugt 1 bis 5 Mol-%, an monomeren Einheiten, die aus Ethylen stammen, umfaßt.

6. Mehrschichtfolie nach einem der vorhergehenden Ansprüche, wobei Schicht (A) im wesentlichen aus vorwiegend isotaktischem Polypropylen besteht.

7. Mehrschichtfolie nach einem der vorhergehenden Ansprüche 1 bis 5, wobei Schicht (A) im wesentlichen aus einer Zusammensetzung besteht, die vorwiegend isotaktisches Polypropylen und 1 bis 5 Gew.-% desselben Copolymers aus Ethylen, das Komponente (b) der Schicht (B) bildet, enthält.

8. Mehrschichtfolie nach einem der vorhergehenden Ansprüche, wobei in Schicht (B) die Komponenten (a) und (b) in einem Gewichtsverhältnis im Bereich von 90/10 bis 70/30 vorliegen.

9. Mehrschichtfolie nach einem der vorhergehenden Ansprüche mit einer Gesamtdicke, wenn nicht gestreckt, im Bereich von 10 bis 500 µm.

10. Mono- oder bi-gestreckte Folie nach einem der Ansprüche 1 bis 9.

11. Verwendung der Folie nach einem der vorhergehenden Ansprüche zur Herstellung flexibler Verpackungen und Klebebänder.

## Revendications

1. Film multicouche, comportant :
A) au moins une couche en polymère, essentiellement constituée d'un polymère cristallin de propylène ou d'une composition d'un tel polymère cristallin et d'au plus 10 % en poids d'un polymère d'éthylène ;
B) au moins une couche en polymère, co-extrudée avec la précédente, essentiellement constituée d'une composition comprenant :
a) de 65 à 99 % en poids d'un copolymère statistique de propylène qui comporte de 0,5 à 20 % en moles de motifs monomères dérivés de l'éthylène,
b) et de 1 à 35 % en poids d'un copolymère d'éthylène qui comporte de 1 à 10 % en moles de motifs monomères dérivés d'une alpha-oléfine dont la molécule comporte au moins 5 atomes de carbone.

2. Film multicouche conforme à la revendication 1, constitué de trois couches co-extrudées, dans lequel une couche centrale (A) est disposée entre deux couches externes (B), de telle manière que l'épaisseur de la couche centrale (A) représente de 50 à 90 % de l'épaisseur totale du film.

3. Film multicouche conforme à la revendication 2, dans lequel les deux couches externes (B) ont la même épaisseur et la même composition.

4. Film multicouche conforme à l'une des revendications précédentes, dans lequel, dans le copolymère d'éthylène formant le composant (b), ladite alpha-oléfine est choisie parmi les alpha-oléfines dont la molécule comporte de 6 à 10 atomes de carbone.

5. Film multicouche conforme à l'une des revendications précédentes, dans lequel ledit copolymère statistique de propylène formant le composant (a) comporte de 1 à 10 % en moles, et de préférence de 1 à 5 % en moles, de motifs monomères dérivés de l'éthylène.

6. Film multicouche conforme à l'une des revendications précédentes, dans lequel ladite couche (A) est essentiellement constituée de polypropylène principalement isotactique.

7. Film multicouche conforme à l'une des revendications précédentes 1 à 5, dans lequel ladite couche (A) est essentiellement constituée d'une composition comprenant un polypropylène principalement isotactique et de 1 à 5 % en poids du même copolymère d'éthylène que celui qui constitue le composant (b) de ladite couche (B).

8. Film multicouche conforme à l'une des revendications précédentes, dans lequel les composants (a) et (b) de ladite couche (B) se trouvent présents en un rapport pondéral de 90/10 à 70/30.

9. Film multicouche conforme à l'une des revendications précédentes, dont l'épaisseur totale, à l'état non-étiré, vaut de 10 à 500 µm.

10. Film mono-orienté ou bi-orienté, conforme à l'une des revendications précédentes 1 à 9.

11. Emploi d'un film, conforme à l'une des revendications précédentes, pour la production d'emballages flexibles et de bandes adhésives.
